# EUROPÄISCHE PATENTSCHRIFT

(11) **EP 1 958 900 B1**
(45) Veröffentlichungstag und Bekanntmachung des Hinweises auf die Patenterteilung: **28.03.2012**
(21) Anmeldenummer: 07115851.3
(22) Anmeldetag: 06.09.2007
(51) Int. Cl.: B65G 69/18, B65B 69/00, B65B 1/28

(54) **Lineranschlussvorrichtung und Linerbefüllvorrichtung**
Liner connection device and liner filling device
Dispositif de raccordement pour sac et dispositif de remplissage de sac

(30) Priorität: 07.12.2006 DE 102006057760
(43) Veröffentlichungstag der Anmeldung: 20.08.2008
(73) Patentinhaber: Hecht Anlagenbau GmbH, 85276 Pfaffenhofen a.d. Ilm (DE)
(72) Erfinder: Multer, Steven, 85276, Pfaffenhofen (DE); Weber, Karsten, 85276, Pfaffenhofen (DE)
(74) Vertreter: Wilhelms · Kilian & Partner Patentanwälte

(56) Entgegenhaltungen:
- EP-A- 1 708 941
- WO-A-00/47473

## Beschreibung

Die Erfindung betrifft ein Verfahren zum kontaminationsfreien Entleeren eines Liners unter Verwendung einer Linerentfeervorrichtung.

In vielen Industriezweigen, z.B. der Pharma- oder Chemieindustrie, werden Rohstoffe zur Weiterverarbeitung verwendet, die bei direktem Kontakt eine erhebliche Gesundheitsgefährdung für die mit diesen Stoffen arbeitenden Menschen darstellen würden. Darüber hinaus können die Rohstoffe, die meistens pulverförmig oder granulatförmig vorliegen, die Umgebung in einem hohen Grad kontaminieren. Aus diesen Gründen werden die pulverförmigen oder granulatförmigen Rohstoffe in ihren Transportbehältern, die Container oder Fässer sein können, von sog. Linern umgeben. Ein Liner ist ein in dem Behälter vorhandener Innensack oder separater Mantel für das zu transportierende Produkt. Ein Liner kann aber auch ein Folienschlauch sein, der an dem zu entleerenden eine beliebe Form aufweisenden Behälter befestigt wird.

Sowohl das Herstellungsverfahren als auch die Weiterverarbeitung werden meistens in einem abgeschlossenen System durchgeführt, wodurch eine Kontamination der Umgebung und eine Gesundheitsgefährdung der Mitarbeiter entfallen. Problempunkte stellen die Schnittstellen bei der Befüllung der die Liner enthaltenden Behälter beim Lieferanten und die Entleerung der die Liner aufweisenden Behälter zur Einführung in den Weiterverarbeitungsprozess bei dem Kunden dar.

Es ist Aufgabe der Erfindung, ein Verfahren zum Entleeren Liner aufweisender Behälter zu schaffen, mit denen ein kontaminationsfreies und ein keine Gesundheitsgefährdungen darstellendes Entleeren der Liner möglich ist.

Diese Aufgabe wird mit einem Verfahren mit den Merkmalen des Patentanspruches 1 gelöst.

Es wird im Folgenden unter Bezug auf die Figuren eine bevorzugte Ausführungsform der Erfindung erläutert.
Fig. 1 zeigt eine Linerentleervorrichtung gemäß der Erfindung.
Fig. 2 zeigt einen ersten Schritt eines Verfahrens unter Verwendung der in Fig. 1 gezeigten Linerentleervorrichtung.
Fig. 3 zeigt einen zweiten Schritt eines Verfahrens unter Verwendung der in Fig. 1 gezeigten Linerentleervorrichtung.
Fig. 4 zeigt einen dritten Schritt eines Verfahrens unter Verwendung der in Fig. 1 gezeigten Linerentleervorrichtung.
Fig. 5 zeigt einen vierten Schritt eines Verfahrens unter Verwendung der in Fig. 1 gezeigten Linerentleervorrichtung.
Fig. 6 zeigt einen fünften Schritt eines Verfahrens unter Verwendung der in Fig. 1 gezeigten Linerentleervorrichtung.
Fig. 7 zeigt einen sechsten Schritt eines Verfahrens unter Verwendung der in Fig. 1 gezeigten Linerentleervorrichtung.

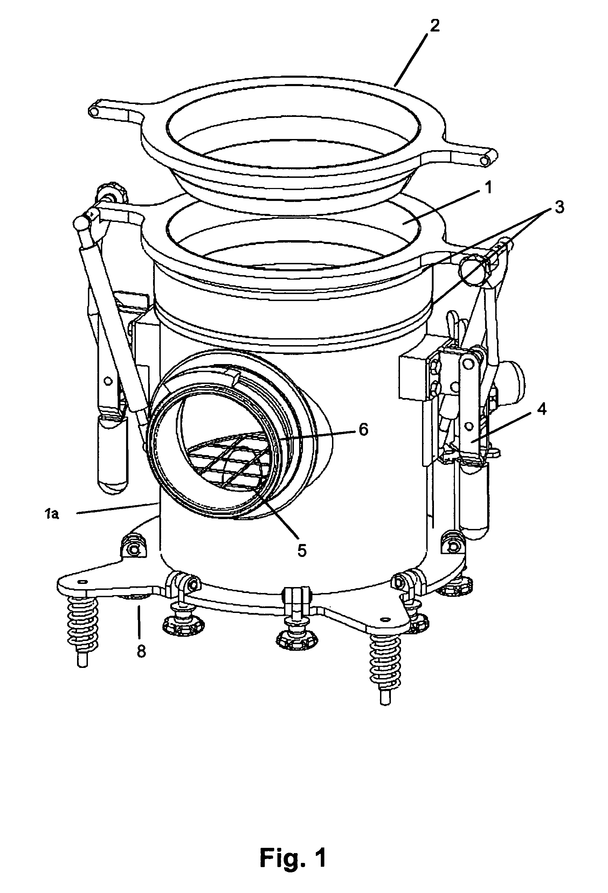

Fig. 1 zeigt eine Vorrichtung zum Entleeren Liner enthaltender Behälter oder von Behäitern, an denen ein Liner angebracht ist (im Folgenden auch als Liner bezeichnet), die
einen vorzugsweise zylindrischen eine Kammer bildenden Grundkörper 1a,
eine Öffnung 1 in dem Grundkörper 1a,
einen Dichtflansch 2 zur Abdichtung des Liners an der Öffnung 1,
zwei Nuten 3 zur Befestigung des Liners an einer Nut, vorzugsweise mit einem O-Ring,
mindestens einen Handhebel 4 zum Öffnen und Schließen des Dichtflansches 2 und
einen Eingriff 5 in den eine Kammer bildenden Grundkörper 1a mit zwei Nuten 6 zur Befestigung eines Foliensackes oder Folienpaketes an einer Nut, vorzugsweise mit einem O-Ring, aufweist.

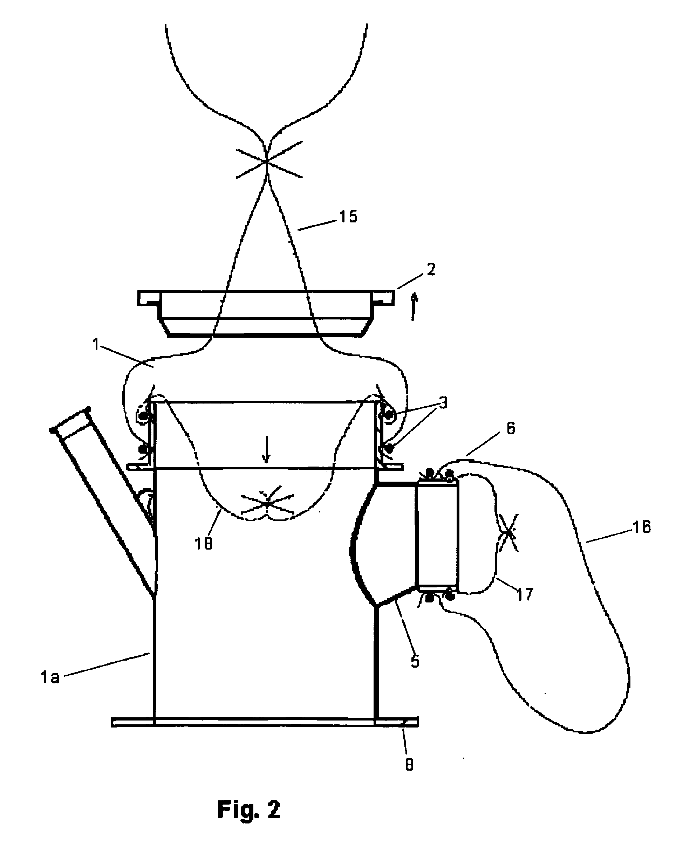

Der verschlossene Liner 15 wird, wie in Fig. 2 gezeigt, durch den Dichtflansch 2 hindurch an der unteren der beiden Nuten 3 mit einem O-Ring befestigt. Die Linerentleervorrichtung ist zu diesem Zeitpunkt ebenfalls mit einer Folie 18, die mit einem O-Ring an der äußeren der zwei Nuten 3 befestigt ist und die von dem zuvor entleerten Liner stammt, verschlossen.

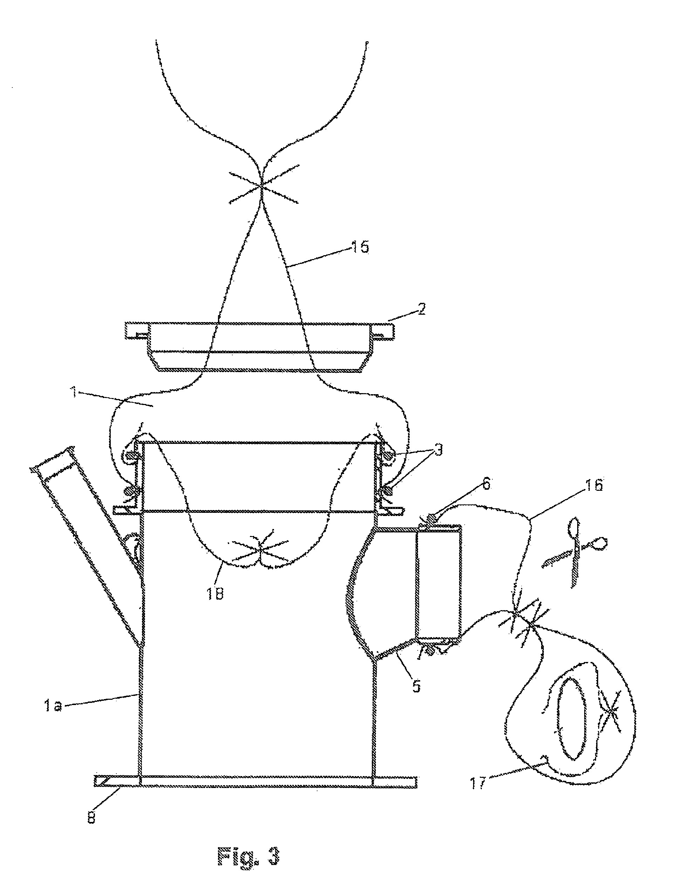

Der seitliche Eingriff 5 ist ebenfalls mit einer abgebundenen Folie 17, die an der äusseren der zwei Nuten 6 befestigt ist und die von dem zuvor verwendeten Foliensack stammt, verschlossen. An der inneren Nut der zwei Nuten 6 wird ein weiterer Foliensack 16 befestigt, der den verschlossenen seitlichen Eingriff 5 verschließt und in den die abgeschnürte Folie 17, wie in Fig. 3 gezeigt, gezogen werden kann.

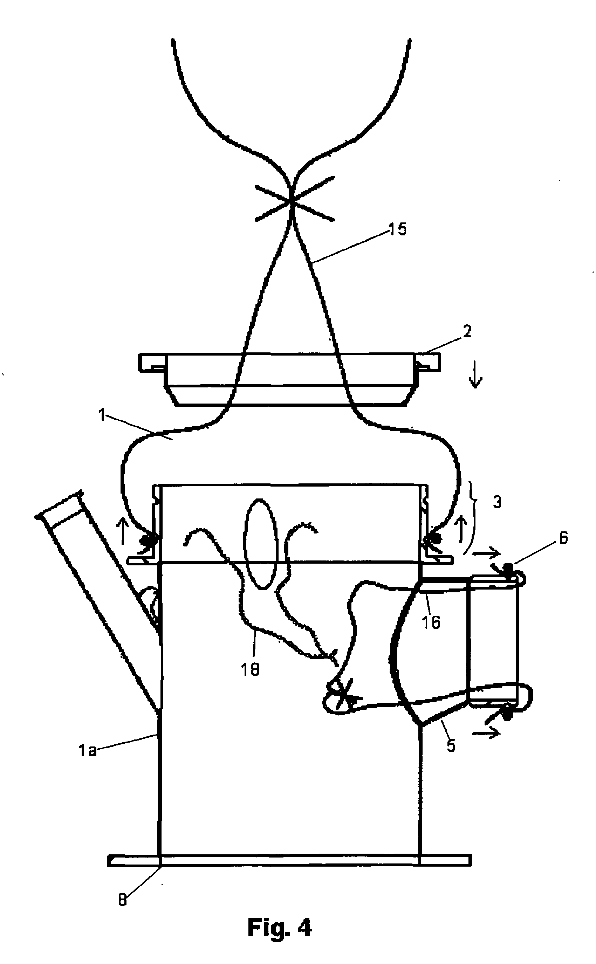

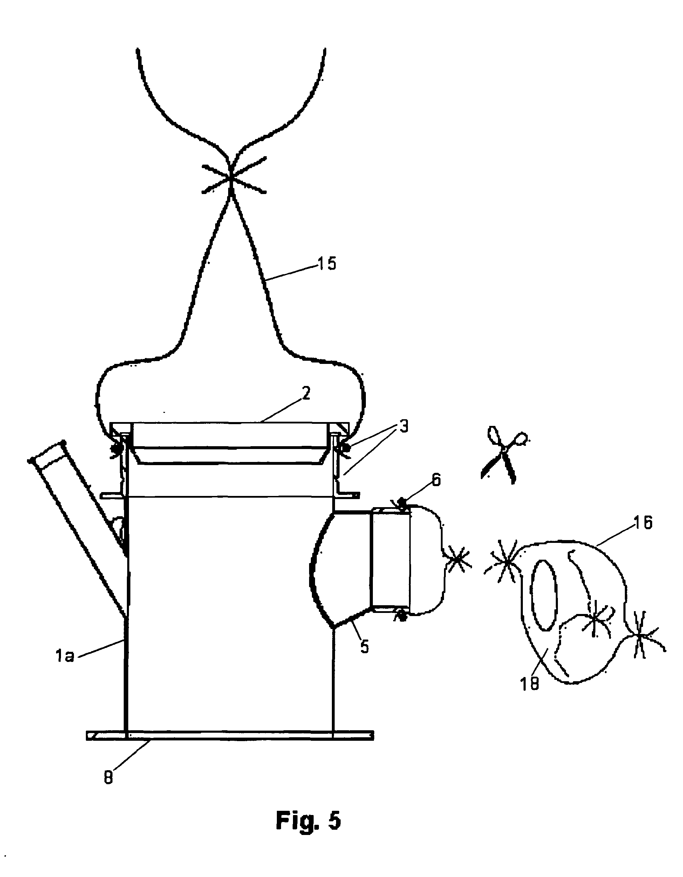

Nachdem die abgeschnürte Folie 17 innerhalb des Foliensackes 16 von dem seitlichen Eingriff entfernt worden ist, wird der Foliensack 16 an einer geeigneten Stelle zweimal abgebunden, vorzugsweise durch Kabelbinder, und zwischen jenen getrennt, wodurch die abgeschnürte Folie 17 von der Linerentleervorrichtung abgetrennt wird. Die Linerentleervorrichtung ist jetzt durch den seitlichen Eingriff 5, wie in Fig. 4 gezeigt, über den abgetrennten Foliensack 16 zugänglich, Der Anwender kann über diesen Zugang in die Linerentleervorrichtung greifen und die abgeschnürte Folie 18, die an der oberen der beiden Nuten 3 befestigt ist und die die Linerentleervorrichtung verschließt, entfernen. Die abgeschnürte entfernte Folie 18 kann durch den seitlichen Eingriff 5 in den Foliensack 16 gezogen werden und wiederum durch zweimaliges Abschnüren und Durchtrennen zwischen den Abbindestellen des Foliensackes von der Linerentleervorrichtung getrennt werden (Fig. 5).

Nachdem der den Liner verbindende O-Ring auf die äußere der beiden Nuten 3 geschoben worden ist, kann der Dichtflansch 2 mit dem Handhebel abgesenkt werden, wodurch der Liner mit der Linerentleervorrichtung abgedichtet verbunden wird.

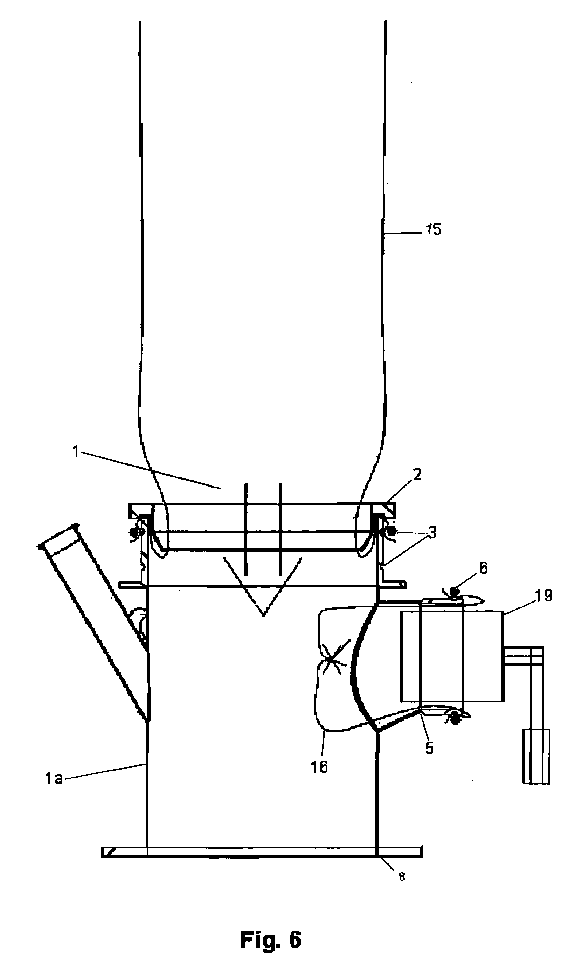

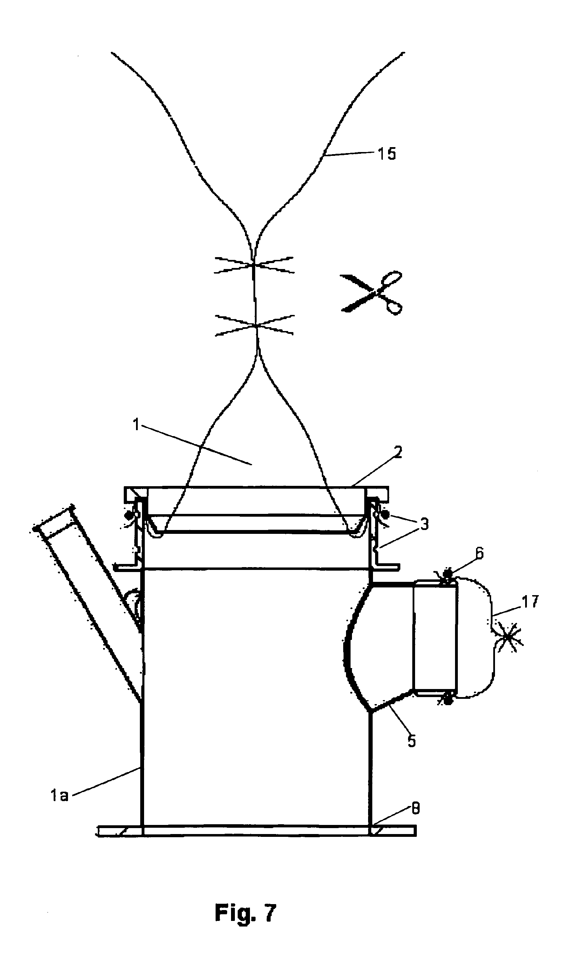

Für den folgenden Entleerprozess, wie in Fig. 6 gezeigt, kann der seitliche Eingriff mit einem Deckel 19 verschlossen werden. Für das Entleeren wird der den Liner 15 verschließende Verschluss geöffnet. Als letzter Schritt wird, wie in Fig. 7 gezeigt, der Liner 15 nach dem Entleeren zweimal abgebunden und zwischen den Abbindestellen durchtrennt, womit die Ausgangsposition aus Fig. 2 vor dem Verbinden des Liners 15, wiederum erreicht wird.

In dem Verfahren kann an dem seitlichen Eingriff eine Endlos-Schlauchfolie vorgesehen sein, in die die Reste des entleerten Liners gezogen werden und ausgeschleust werden können. Der Foliensack und die Nuten sind in diesem Fall nicht notwendig, wobei eine geeignete Befestigungsvorrichtung für das Endlos-Schlauchfolienpaket vorgesehen ist.

## Patentansprüche

1. Verfahren zum Entleeren eines Liners, der an einen Behälter angeschlossen ist, unter unter Verwendung einer Vorrichtung, welche aufweist:
einen eine Kammer bildenden Grundkörper (1a), in den der Behälter über eine Öffnung (1) entleerbar ist;
eine Befestigungsvorrichtung (3) zur Befestigung des Liners an der Öffnung (1);
einen Dichtflansch (2), mit dem der Liner an der Öffnung (1) abgedichtet anbringbar ist;
einen Hebel (4) zum Abheben und Anlegen des Dichtflansches (2) von und an die Öffnung (1);
einen Eingriff (5) in den Grundkörper (1a), wobei der Eingriff eine Befestigungsvorrichtung (6) zur Befestigung eines Foliensackes oder einer Endlos-Schlauchfolie aufweist und
eine Anschlussvorrichtung (8) für den Anschluss der Vorrichtung an eine Komponente eines Verarbeitungsprozesses; wobei das Verfahren folgende Verfahrensschritte aufweist:
a) Anbringen eines verschlossen zu entleerenden Liners (15) eines Behälters durch den Dichtflansch (2) hindurch an der Befestigungsvorrichtung (3), wobei ein geschlossener Rest (18) eines Liners eines zuvor entleerten Behälters eingeschlossen wird,
b) Befestigen eines Foliensackes (16), oder einer Endlos-Schlauchfolie, an dem Eingriff (5), wobei eine den Eingriff (5) verschließende Folie (17) eingeschlossen wird,
c) Entfernen des geschlossenen Restes (18) von der Öffnung (1) durch den Eingriff (5) hindurch,
d) Anlegen des Dichtflansches (2) zum Abdichten des angeschlossenen Liners (15),
e) Öffnen und Entleeren des angebrachten Liners (15),
f) Abbinden dieses Liners (15) an zwei benachbarten Stellen und Durchtrennen des Liners zwischen den beiden benachbarten Stellen.

2. Verfahren gemäß Anspruch 1, wobei
in Verfahrensschritt c) der geschlossene Rest (18) durch den Eingriff (5) hindurch in den Foliensack (16) oder die Endlos-Schlauchfolie gezogen wird und durch zweimaliges Abbinden und Durchtrennen dazwischen von der Vorrichtung getrennt wird.

3. Verfahren gemäß Anspruch 1 oder 2, wobei
zu einem beliebigen Zeitpunkt nach Verfahrensschritt b) die den Eingriff (5) verschließende Folie (17) in den Foliensack (16) oder die Endlos-Schlauchfolie gezogen wird und durch zweimaliges Abbinden und Durchtrennen dazwischen von der Vorrichtung getrennt wird.

4. Verfahren gemäß Anspruch 1, 2 oder 3, wobei
die Befestigungsvorrichtung (3) zur Befestigung des Liners an der Öffnung (1) zwei Nuten umfasst, über die der Liner in Verfahrensschritt a) mit einem O-Ring an der Öffnung (1) befestigt wird, und wobei der den Liner befestigende O-Ring zwischen Verfahrensschritt c) und d) auf die andere Nut versetzt wird.

5. Verfahren gemäß einem der Ansprüche 1 bis 4, wobei während Verfahrensschritt e) der Eingriff (5) mit einem Deckel (19) verschlossen wird.

6. Verfahren gemäß einem der Ansprüche 1 bis 5, wobei die Befestigungsvorrichtung (6) an dem Eingriff (5) zwei Nuten umfasst, über die der Foliensack in Verfahrensschritt b) mit einem O-Ring an dem Eingriff (5) befestigt wird, und wobei der den Foliensack befestigende O-Ring zwischen Verfahrensschritt c) und d) auf die andere Nut versetzt wird.

## Claims

1. A method of emptying a liner which is connected to a container using a liner emptying device which comprises:
a base body (1a) forming a chamber into which the container can be emptied through an opening (1),
a fastening device (3) for fastening the liner to the opening (1),
a sealing flange (2) through which the liner can be sealed to the opening (1),
a lever (4) for raising and placing the sealing flange (2) away from or onto the opening (1),
an access port (5) for providing access into the base body (1a), wherein the access port (5) comprises a fastening device (6) for fastening a film bag or a continuous tubular film, and
a connecting device (8) for connection of the liner emptying device to a component of a treatment process, wherein
the method comprises the steps of:
a) attaching a closed liner (15) of a container to be emptied through the sealing flange (2) to the fastening device (3), a closed remainder (18) of a liner of a previously emptied container being encased,
b) fastening a film bag (16) or a continuous tubular film to said access port (5), a film (17) closing the access port (5) being encased,
c) removing the closed remainder (18) at the opening (1) through the access port (5),
d) placing the sealing flange (2) so as to seal the attached liner (15),
e) opening and emptying the connected liner (15),
f) tying off this liner (15) at two adjacent locations and cutting the liner between the two adjacent locations.

2. The method according to claim 1, wherein, in step c), the closed remainder (18) is drawn through the access port (5) into the film bag (16) or the continuous tubular film and is separated from the device by tying off twice and cutting there between.

3. The method according to claim 1 or 2, wherein, at an arbitrary point in time subsequent to step b), the film (17) closing the access port (5) is drawn into the film bag (16) or the continuous tubular film and is separated from the device by tying off twice and cutting there between.

4. The method according to claim 1, 2 or 3, wherein the fastening device (3) for fastening the liner to the opening (1) comprises two grooves through which, in step a), the liner is fastened to the opening (1) with an O-ring and wherein, between step c) and d), the O-ring fastening the liner is pushed onto the other groove.

5. The method according to one of the claims 1 to 4, wherein, in step e), the access port (5) is closed with a cap.

6. The method according to one of the claims 1 to 5, wherein the fastening device (6) at the access port (5) comprises two grooves, through which, in step b), the film bag is fastened with an O-ring to the access port (5) and wherein, between step c) and d), the O-ring fastening the film bag is pushed onto the other groove.

## Revendications

1. Procédé de vidange d' un sac qui est raccordé à un récipient, en utilisant un dispositif qui présente :
- un corps de base (1a) formant une chambre, dans lequel le récipient peut être vidé par une ouverture (1) ;
- un dispositif de fixation (3) pour la fixation du sac sur l'ouverture (1) ;
- une bride étanche (2), avec laquelle le sac peut être monté de manière étanche sur l'ouverture (1) ;
- un levier (4) pour le soulèvement et l'application de la bride étanche (2) de et sur l'ouverture (1) ;
- un orifice d'accès (5) dans le corps de base (1a), sachant que l'orifice d'accès présente un dispositif de fixation (6) pour la fixation d'un sac en feuilles ou d'une feuille en gaine sans fin ; et
- un dispositif de raccordement (8) pour le raccordement du dispositif à un composant d'un processus de traitement ; dans lequel le procédé présente les étapes de procédé suivantes :
a) le montage d'un sac (15) fermé à vider d'un récipient par la bride étanche (2) sur le dispositif de fixation (3), sachant qu'un reste fermé (18) d'un sac d'un récipient vidé précédemment est inclus,
b) la fixation d'un sac en film (16) ou d'un film en gaine sans fin sur l'orifice d'accès (5), sachant qu'un film (17) fermant l'orifice d'accès (5) est incluse,
c) le retrait du reste fermé (18) de l'ouverture (1) par l'orifice d'accès (5),
d) l'application de la bride étanche (2) pour rendre étanche le sac raccordé (15),
e) l'ouverture et la vidange du sac (15) monté,
f) la liaison de ce sac (15) sur deux endroits contigus et séparation du sac entre les deux endroits contigus.

2. Procédé selon la revendication 1, dans lequel à l'étape de procédé c), le reste fermé (18) est tiré par l'orifice d'accès (5) dans le sac en film (16) ou le film en gaine sans fin et est séparé du dispositif au milieu par la double liaison et séparation.

3. Procédé selon la revendication 1 ou 2, dans lequel à un moment quelconque après l'étape de procédé b), le film (17) fermant l'orifice d'accès (5) est tirée dans le sac en film (16) ou le film en gaine sans fin et est séparée du dispositif au milieu par la double liaison et séparation.

4. Procédé selon la revendication 1, 2 ou 3, dans lequel le dispositif de fixation (3) comporte pour la fixation du sac sur l'ouverture (1) deux rainures, par lesquelles le sac est fixé à l'étape de procédé a) par un joint torique sur l'ouverture (1), et sachant que le joint torique fixant le sac est déplacé sur l'autre rainure entre l'étape de procédé c) et d).

5. Procédé selon l'une quelconque des revendications 1 à 4, dans lequel pendant l'étape de procédé e), l'orifice d'accès (5) est fermé par un couvercle (19).

6. Procédé selon l'une quelconque des revendications 1 à 5, dans lequel le dispositif de fixation (6) comporte sur l'orifice d'accès (5) deux rainures, par lesquelles le sac en film est fixé à l'étape de procédé b) par un joint torique sur l'orifice d'accès (5), et dans lequel le joint torique fixant le sac en film est déplacé sur l'autre rainure entre l'étape de procédé c) et d).
